# EUROPEAN PATENT SPECIFICATION

(11) **EP 3 587 706 B1**
(45) Date of publication and mention of the grant of the patent: **17.02.2021**
(21) Application number: 18382470.5
(22) Date of filing: 25.06.2018
(51) Int. Cl.: E04G 21/08, H02K 11/33, H02K 7/14, H02K 5/22

(54) **CONCRETE VIBRATOR**
BETONRÜTTLER
VIBRATEUR DE BÉTON

(43) Date of publication of application: 01.01.2020
(73) Proprietor: Idneo Technologies, S.A.U., 08028 Barcelona (ES)
(72) Inventor: PUJOL ARTIGAS, José María, 08017 Barcelona (ES); GEA MIRALLES, Francisco, 08222 Terrassa (ES)
(74) Representative: Juncosa Miró, Jaime

(56) References cited:
- WO-A1-2010/087960
- DE-A1-102007 034 013
- DE-A1-102015 211 580
- US-A1- 2013 192 581

## Description

### Technical field

The present invention discloses a concrete vibrator, specifically an internal concrete vibrator powered by a brushless electric motor, wherein the necessary electronic circuitry used to control the operation of the concrete vibrator and the brushless electric motor is at least partially included inside a casing of the concrete vibrator.

Brushless electric motors (BLDC motors or BL motors), are also known as electronically commutated motors (ECMs or EC motors) or synchronous DC motors.

Internal concrete vibrators are also known in this field as immersion, poker or needle concrete vibrators.

### State of the Art

Concrete vibrators, specifically internal concrete vibrators, are used to redistribute, mix and firmly settle, as their name suggests, concrete when it is freshly poured by inserting a vibrating needle or head in order to eliminate and extract either excess water and/or trapped air which may cause internal and/or surface defects as well as compromise the final strength of the concrete once it has settled. The efficient use of vibrations when the concrete is freshly poured allows the obtention of concrete with different strength gradients.

There is a vast range of concrete vibrators available in the market, wherein these concrete vibrators may include different technical specifications as well as designs or configurations.

Patent nº US 5 202 612 discloses a concrete vibrator made up of an external driving circuit box with a switch connected to a vibration needle via a cable or a sleeve. The vibration needle includes a first driving section including a DC brushless motor adjacent to a second vibrating section including an eccentric pendulum. As the DC brushless motor is located in the vibrating needle it is subject to impacts which may lead to malfunctions of the driving unit of the concrete vibrator.

Patent application nº WO 2009/154325 discloses a concrete vibrator driven by a three-phase induction motor with a cooling unit attached to a rear surface of the motor and an inverter circuit attached to an upper cover of the casing of the concrete vibrator.

On the other hand patent application nº US 2012/092948 or WO2010/087960 disclose a concrete vibrator driven by a constant speed universal motor also including a fan and a control circuit inside the housing of the concrete vibrator.

In addition to the cited patent literature disclosed above, it should be noted that brushless electric motors had already been used in the design and improvement of different hand-held power tools, such as drills or grinders, as seen in patent nº US 6 123 158 or patent nº EP 1 715 565, which disclose the use of brushless motors in hand-held power tools.

DE102007034013 A1 discloses a concrete vibrator provided with brushless electric motor inside a hand-held casing to drive concrete vibrators.

The aim of the present invention is the obtention of a compact concrete vibrator, which is driven by a brushless electric motor, affording said concrete vibrator a higher power/torque to weight ratio increasing its efficiency, decrease in the noise generated by the motor, improved life-span, increased speed and an improved control through the use of electronic circuitry integrated and connected to the brushless motor housed within a hollow body of the concrete vibrator casing. The present invention relates specifically to an internal concrete vibrator. The above objects are achieved with a concrete vibrator according to claim 1.

### Brief description of the invention

The present invention discloses an internal concrete vibrator made up of a hollow casing, which has a predetermined wall-thickness. The casing is preferably a moulded article made up of two substantially symmetrical halves or parts, which are attached or assembled to one another by means of a fastening mechanism or mechanisms and preferably detachable from one another. The interior chamber, inside the casing defined by the two halves or parts, defines a hollow body into which the different components of the concrete vibrator are arranged.

The fastening mechanism or mechanisms used to assemble both halves of the hollow body are selected from a group comprising:
- a welding line along an exterior surface of the hollow body where the two halves meet, wherein the welding is achieved preferably through either material deposition or fusion welding,
- a plurality of moulded cavities distributed in one half of the hollow body and an equal plurality of moulded protuberances distributed accordingly on the remaining half of the hollow body which are then inserted into the cavities, and may optionally include the use of an adhesive or resin to improve fastening of both halves, or
- a plurality of moulded cavities, preferably threaded, distributed in one half of the hollow body and an equal plurality of orifices distributed accordingly on the remaining half of the hollow body so that screws are inserted through the orifices and into the cavities,
among other known fastening mechanisms, the use of which would be obvious to a technical expert.

The casing is designed to have at least one or more air inlets and outlets, to allow air to flow through the interior of the casing of the concrete vibrator and cool the different components arranged inside of it and a handle portion so a user can handle, operate and/or carry the concrete vibrator adequately. The handle portion of the casing of the concrete vibrator may further include at least one of a switch to control and modify the operational status of the concrete vibrator as well as an inlet for passage of an electric cable connected to an electricity power source.

The concrete vibrator may optionally include, in certain embodiments of the invention, an electronic display on an exterior surface of the casing, indicating information relative to the concrete vibrator such as an operational status, a speed, a temperature or over-heat visual alarm signal of the concrete vibrator, among others.

The different components arranged inside the hollow body of the casing include, but are not limited to, a motor, at least part of the electronic circuitry which controls said motor, a rotor shaft driven by said motor and a cooling fan.

According to the invention, the cooling fan is mounted on the rotor shaft, adjacent to air outlets, so that it rotates according to a rotational speed generated by the motor.

A transmission head is located on one end of the rotor shaft, the end being the output of the rotor shaft outside the casing of the concrete vibrator, and it is designed to allow the coupling of different transmission cables or sleeves with a vibrating head or needle on the end opposite to the transmission head.

The motor which drives the rotor shaft of the concrete vibrator is a brushless electric motor, in either an inrunner or an outrunner configuration although preferably arranged in said outrunner configuration, which is made up of a stator arranged coaxially around the rotor shaft, a rotor coaxially revolving around said stator, a plurality of airgaps arranged between the stator and the rotor, with a height of at least 1 mm, so that air can flow through the brushless electric motor, and at least one hall sensor. The at least one hall sensor is used to detect the position of the permanent magnets usually arranged on the rotor. The motor may or may not include an exterior casing surrounding its different components.

In addition to the motor being a brushless electric motor, the electronic circuitry that controls the brushless electric motor is at least partially housed within a cavity located inside the casing of the concrete vibrator. The cavity is adjacent to and surrounds a portion of the rotor shaft, and is located between a face of the brushless electric motor, said face being the one opposite the cooling fan, and an air inlet of the casing.

In a preferred embodiment, the electronic circuitry which controls the brushless electric motor is fully housed in said cavity, and is at least partially surrounding a portion of the rotor shaft, preferably fully surrounding the rotor shaft in an annular configuration.

In another preferred embodiment, the electronic circuitry may include a safety device to reboot the concrete vibrator automatically in response to a power transmission failure from an electricity source.

It should be noted that the hollow body or casing of the concrete vibrator, herein disclosed, may be obtained as a result of a wide range of techniques, such as over-moulding the different components included inside the concrete vibrator, obtaining one continuous casing with an interior hollow body encasing the different components which doesn't require fastening elements or mechanisms, or by producing a plurality of moulded or machined parts, and assembling them together to obtain a hollow body defined by a casing made up of the different parts which encases the different components included in the concrete vibrator, among others which would be obvious to a technical expert.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and not limitative, in which:
- **FIG. 1a** and **FIG. 1b** illustrate an embodiment of the concrete vibrator showing the interior of one of the halves of the casing, and
- **FIG. 2** illustrates a schematic representation of the possible arrangements of the electronic circuitry in the cavity, as seen in **FIG. 1a** or **1b****.**

### Detailed description of an embodiment

The foregoing and other advantages and features will be more fully understood from the following detailed description of an embodiment with reference to the accompanying drawings, to be taken in an illustrative and non-limitative manner, in which:

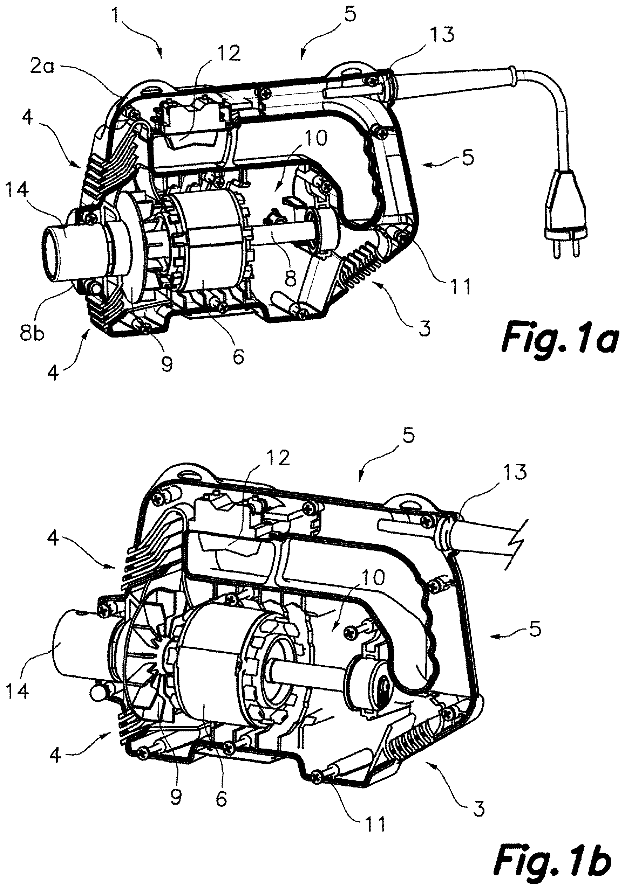

FIG. **1a** and **FIG. 1b** illustrate different angle perspectives showing the interior of one of the halves 2a, 2b of the casing 2 of a preferred embodiment of the concrete vibrator 1. These figures show the interior arrangement of the different main components included in a hollow body or space inside the casing 2 of the concrete vibrator 1, except for the electronic circuitry 7 which controls the brushless electric motor 6, as well as other minor components and wiring to simplify the drawings. However in these Figs. 1a and 1b an empty space o cavity 10 is clearly seen inside the casing 2, adjacent to the rotor shaft 8, which is designed to receive the electronic circuity 7, wherein said cavity 10 is located between an opposite face of the brushless electric motor 6, opposite the cooling fan 9, and an air inlet 3 of the casing 2.

The casing 2 of the concrete vibrator 1, which has a predetermined wall-thickness, is designed to include one air inlet 3 at one end of the casing 2 and two air outlets 4 placed on the opposite end. It also includes a rotor shaft outlet 8b, as well as a handle portion 5 which includes a switch 12 to operate the concrete vibrator 1 and an inlet 13 to allow passage of an electric cable connected to or plugged into an electricity power source to feed the brushless electric motor 6 and electronic circuitry 7.

The interior of the casing 2 defines a hollow body or space which encases a rotor shaft 8 which is supported on bearings which are coaxial to an axis defined by the rotor shaft 8, wherein said bearings are supported in turn on structural reinforcements of the moulded halves 2a, 2b of the casing 2 of the concrete vibrator 1. The brushless electric motor 6 and the cooling fan 9 are placed coaxially around the rotor shaft 8, adjacent to one another, wherein the cooling fan 9 is also adjacent to the rotor shaft outlet 8b.

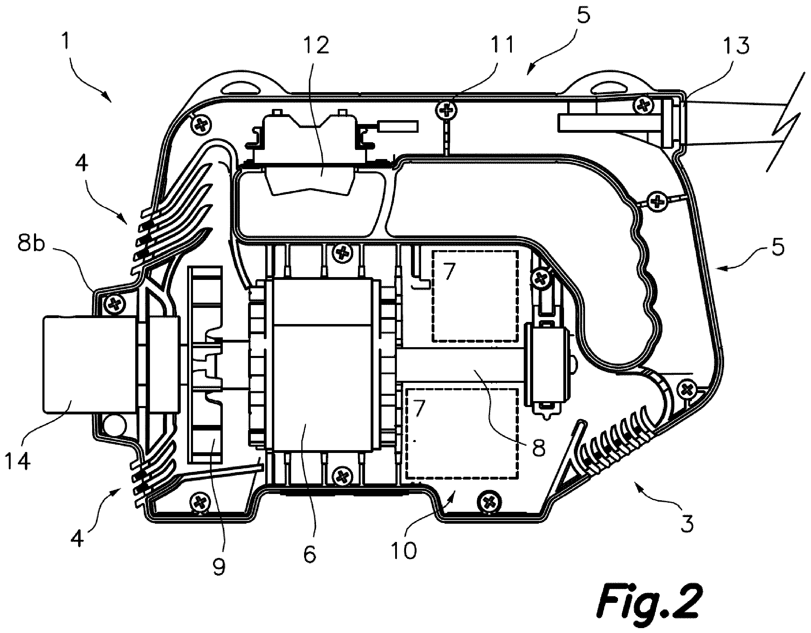

A cavity 10 is located between the brushless electric motor 6 and one of the bearings supporting the rotor shaft 8, wherein said bearing is the one nearest the air inlet 3. The cavity 10 surrounds a portion of the rotor shaft 8 and is used to install at least part of the electronic circuitry 7, and its corresponding wiring, which controls at least the brushless electric motor 6, preferably all of the electronic circuitry 7 arranged in a certain configuration, discussed further in **FIG. 2****.**

**FIG. 2** shows the interior of one halve 2a, 2b of a casing 2 of a concrete vibrator 1, as described previously in **FIG. 1a** and **FIG. 1b**, and how the different components included in said casing 2 are arranged, such as the brushless electric motor 6, the rotor shaft 8, the cooling fan 9, the fastening mechanism 11 and more importantly how the electronic circuitry 7 which controls the brushless electric motor 6 is arranged inside cavity 10.

The electronic circuitry 7 may be arranged in such a way that it is **i)** located below, above or on either one of the lateral sides perpendicular to an axis defined by the rotor shaft 8, **ii)** distributed, preferably evenly, above and below or on either side of the rotor shaft 8, **iii)** surrounding the rotor shaft 8 in an annular-shaped configuration, **iv)** partially surrounding the rotor shaft 8 in an L-shaped configuration, or **v)** partially surrounding the rotor shaft 8 in a C-shaped configuration.

The previous arrangements **i)** to **v)** are only a few examples of how the electronic circuitry 7 may be placed inside the housing 10, and is not limited exclusively to the described arrangements, wherein other arrangements not described herein should be considered obvious to a technical expert.

**FIGs. 1a/1b** and **FIG. 2** illustrate the arrangement and distribution of a plurality of fasteners which together form the fastener mechanism 11, which in this particular embodiment comprises a plurality of holes or cavities, preferably threaded, on a first half 2a of the casing 2, into which screws or bolts are inserted through parallel orifices arranged equally throughout a second half 2b of the casing 2 of the concrete vibrator 1, wherein the second half 2b is not shown in these figures, although the screws are.

It will be understood that various parts of one embodiment of the invention can be freely combined with parts described in other embodiments, even being said combination not explicitly described, provided there is no harm in such combination.

It will be understood that references to geometric position, such as parallel, perpendicular, tangent, etc. allow deviations of up to ± 5° from the theoretical position defined by this nomenclature.

## Claims

1. A concrete vibrator (1) comprising a casing (2), with a predetermined wall-thickness, which has one or more air inlets (3), one or more air outlets (4), and a handle portion (5); wherein the interior of said casing (2) defines a hollow body containing:
- a rotor shaft (8) driven by a brushless electric motor (6) comprising a stator, arranged coaxially around a rotor shaft (8), a rotor, coaxially revolving around said stator, a plurality of airgaps arranged between the stator and the rotor, with a height of at least 1 mm, allowing the circulation of a cooling airflow through the brushless electric motor (6), and at least one hall sensor,
- at least part of an electronic circuitry (7), which controls said brushless electric motor (6), housed within a cavity (10) defined inside the casing (2) adjacent to said rotor shaft (8), the cavity (10) surrounding a portion of the rotor shaft (8); and
- a cooling fan (9) mounted on the rotor shaft (8) adjacent to said one or more air outlets (4) to generate the cooling airflow through the interior of the casing between the one or more air inlets (3) and the one or more air outlets (4) to cool different components arranged inside the casing including the brushless electric motor (6) driving the rotor shaft (8) and said at least part of the electronic circuitry (7),
**characterised in that**
said cavity (10) is located between an opposite face of the brushless electric motor (6) opposite the cooling fan (9), and an air inlet (3) of the casing (2), said cavity surrounding a portion of the bearing shaft (8) located between the brushless electric motor (6) and one of the bearings, nearest the air inlet (3), supporting the rotor shaft (8).

2. Concrete vibrator (1) according to claim 1 wherein the electronic circuitry (7) is fully housed in said cavity (10).

3. Concrete vibrator (1) according to claim 1 or 2, wherein said at least one part of the electronic circuitry (7) is positioned in the cavity (10) at least partially surrounding the rotor shaft (8).

4. Concrete vibrator (1) according to claim 3, wherein the electronic circuitry (7) surrounds the rotor shaft (8) in an annular configuration.

5. Concrete vibrator (1) according to claim 1, wherein the electronic circuitry (7) includes a safety device to reboot the concrete vibrator (1) in response to a power transmission failure from an electricity source.

6. Concrete vibrator (1) according to claim 1, wherein an exterior surface of the casing (2) includes an electronic display indicating an operational status of the concrete vibrator (1).

7. Concrete vibrator (1) according to claim 1, wherein the handle portion (5) further includes at least one of:
- a switch (12) to control and modify the operational status of the concrete vibrator (1), and
- an inlet (13) for passage of an electric cable connected to an electricity power source.

8. Concrete vibrator (1) according to claim 1, wherein said cooling fan (9) is mounted on the rotor shaft (8) so that it rotates according to a rotational speed of the motor.

9. Concrete vibrator (1) according to claim 1, further comprising a transmission head (14) on one end of the rotor shaft (8), wherein said transmission head (14) is designed for coupling of at least a transmission cable equipped with a vibrating head.

10. Concrete vibrator (1), according to any of the previous claims, wherein the casing (2) comprises two substantially symmetric halves (2a, 2b), attached to one another by means of a fastening mechanism (11).

## Patentansprüche

1. Betonrüttler (1), umfassend ein Gehäuse (2) mit einer vorgegebenen Wanddicke, das einen oder mehrere Lufteinlässe (3), einen oder mehrere Luftauslässe (4) und einen Griffbereich (5) aufweist; wobei das Innere des genannten Gehäuses (2) einen Hohlkörper bildet, der Folgendes enthält:
- eine Rotorwelle (8), angetrieben durch einen bürstenlosen Elektromotor (6) mit einem koaxial um eine Rotorwelle (8) angeordneten Stator, einem koaxial um den genannten Stator umlaufenden Rotor, einer Mehrzahl von zwischen dem Stator und dem Rotor angeordneten Luftspalten von mindestens 1 mm Höhe, die die Zirkulation eines Kühlluftstroms durch den bürstenlosen Elektromotor (6) ermöglichen, und mindestens einem Hall-Sensor,
- mindestens den Teil einer elektronischen Schaltung (7), die den genannten bürstenlosen Elektromotor (6) steuert und in einem in dem Gehäuse (2) angrenzend an die genannte Rotorwelle (8) ausgebildeten Hohlraum (10) untergebracht ist, wobei der Hohlraum (10) einen Teil der Rotorwelle (8) umgibt; und
- ein auf der Rotorwelle (8) angrenzend an den genannten einen oder die mehreren Luftauslässe (4) angebrachtes Kühlgebläse (9) zur Erzeugung des Kühlluftstroms durch das Gehäuseinnere zwischen dem einen oder den mehreren Lufteinlässen (3) und dem einen oder den mehreren Luftauslässen (4) zur Kühlung verschiedener, innerhalb des Gehäuses angeordneter Komponenten, einschließlich des die Rotorwelle (8) antreibenden bürstenlosen Elektromotors (6) und des genannten mindestens einen Teils der elektronischen Schaltung (7),
**dadurch gekennzeichnet, dass**
der genannte Hohlraum (10) zwischen einer dem Kühlgebläse (9) gegenüberliegenden Seite des bürstenlosen Elektromotors (6) und einem Lufteinlass (3) des Gehäuses (2) angeordnet ist, wobei der genannte Hohlraum einen Bereich der Lagerwelle (8) zwischen dem bürstenlosen Elektromotor (6) und einem der dem Lufteinlass (3) nächstgelegenen, die Rotorwelle (8) tragenden Lager umgibt.

2. Betonrüttler (1) nach Anspruch 1, wobei die elektronische Schaltung (7) gänzlich in dem genannten Hohlraum (10) untergebracht ist.

3. Betonrüttler (1) nach Anspruch 1 oder 2, wobei der genannte mindestens eine Teil der elektronischen Schaltung (7) in dem die Rotorwelle (8) zumindest teilweise umgebenden Hohlraum (10) angeordnet ist.

4. Betonrüttler (1) nach Anspruch 3, wobei die elektronische Schaltung (7) die Rotorwelle (8) in einer ringförmigen Anordnung umgibt.

5. Betonrüttler (1) nach Anspruch 1, wobei die elektronische Schaltung (7) eine Sicherheitsvorrichtung zum erneuten Anlauf des Betonrüttlers (1) als Reaktion auf einen Energieübertragungsfehler von einer Stromquelle aufweist.

6. Betonrüttler (1) nach Anspruch 1, wobei eine Außenfläche des Gehäuses (2) ein den Betriebszustand des Betonrüttlers (1) anzeigendes elektronisches Display aufweist.

7. Betonrüttler (1) nach Anspruch 1, wobei der Griffbereich (5) ferner mindestens eines der folgenden Elemente aufweist:
- einen Schalter (12) zum Steuern und Ändern des Betriebszustands des Betonrüttlers (1), und
- einen Einlass (13) zum Durchtritt eines an eine Stromquelle angeschlossenen Stromkabels.

8. Betonrüttler (1) nach Anspruch 1, wobei das genannte Kühlgebläse (9) so auf der Rotorwelle (8) angebracht ist, dass es sich in Übereinstimmung mit der Drehzahl des Motors dreht.

9. Betonrüttler (1) nach Anspruch 1, ferner umfassend einen Übertragungskopf (14) an einem Ende der Rotorwelle (8), wobei der genannte Übertragungskopf (14) zum Anschluss mindestens eines mit einem Rüttelkopf ausgestatteten Übertragungskabels ausgelegt ist.

10. Betonrüttler (1) nach einem der vorstehenden Ansprüche, wobei das Gehäuse (2) zwei im Wesentlichen symmetrische Hälften (2a, 2b) umfasst, die mittels eines Befestigungsmechanismus (11) aneinander befestigt sind.

## Revendications

1. Un vibrateur de béton (1) comportant un boîtier (2) ayant une grosseur de paroi prédéterminée, qui possède une ou plusieurs entrées d'air (3), une ou plusieurs sorties d'air (4) et une portion d'anse (5) ; où l'intérieur de ce boîtier (2) définit un corps creux contenant :
- un arbre de rotor (8) entraîné par un moteur électrique sans balai (6) comportant un stator, coaxialement aménagé autour d'un arbre de rotor (8), un rotor, coaxialement tournant autour de ce stator, une pluralité de trous d'air aménagés entre le stator et le rotor, ayant une hauteur d'au moins 1 mm, permettant la circulation d'un courant d'air refroidissant à travers le moteur électrique sans balai (6) et au moins un capteur Hall.
- au moins une partie de la circuiterie électronique (7), qui contrôle ce moteur électrique sans balai (6), logée à l'intérieur d'une cavité (10) définie à l'intérieur du boîtier (2) adjacent à cet arbre de rotor (8), la cavité (10) entourant une portion de l'arbre de rotor (8) ; et
- un ventilateur de refroidissement (9) monté sur l'arbre de rotor (8) adjacent à ces une ou plusieurs sorties (4) pour générer le courant d'air refroidissant à travers l'intérieur du boîtier entre l'une ou les plusieurs entrées d'air (3) et l'une ou les plusieurs sorties d'air (4) pour refroidir différents composants aménagés à l'intérieur du boîtier comprenant le moteur électrique sans balai (6), entraînant l'arbre de rotor (8) et cette au moins partie de la circuiterie électrique (7).
**caractérisé en ce que**
cette cavité (10) est située entre une face opposée du moteur électrique sans balai (6) opposée au ventilateur de refroidissement (9) et une entrée d'air (3) du boîtier (2), cette cavité entourant une portion de l'arbre de roulement (8) situé entre le moteur électrique sans balai (6) et un des paliers, le plus proche de l'entrée d'air (3), supportant l'arbre de rotor (8).

2. Vibrateur de béton (1) conformément à la revendication 1, où la circuiterie électronique (7) est totalement logée dans cette cavité (10).

3. Vibrateur de béton (1) conformément à la revendication 1 ou 2, où cette au moins une partie de la circuiterie électronique (7) est positionnée dans la cavité (10) entourant au moins en partie l'arbre de rotor (8).

4. Vibrateur de béton (1) conformément à la revendication 3, où la circuiterie électronique (7) entoure l'arbre du rotor (8) dans une configuration annulaire.

5. Vibrateur de béton (1) conformément à la revendication 1, où la circuiterie électronique (7) comprend un dispositif de sécurité pour réamorcer le vibrateur de béton (1) en réponse à une panne de transmission d'énergie de la source d'électricité.

6. Vibrateur de béton (1) conformément à la revendication 1, où une surface extérieure du boîtier (2) comprend un affichage électronique indiquant un état opérationnel du vibrateur de béton (1).

7. Vibrateur de béton (1) conformément à la revendication 1, où la portion d'anse (5) comprend en outre au moins :
- un interrupteur (12) pour contrôler et modifier l'état opérationnel du vibrateur de béton (1), et
- une entrée (13) pour le passage d'un câble électrique connecté à une source d'énergie électrique.

8. Vibrateur de béton (1) conformément à la revendication 1, où ce ventilateur refroidissant (9) est monté sur l'arbre de rotor (8) de sorte qu'il tourne conformément à la vitesse rotatoire du moteur.

9. Vibrateur de béton (1) conformément à la revendication 1, comportant en outre une tête de transmission (14) sur une extrémité de l'arbre de rotor (8), où cette tête de transmission (14) est destinée au couplage d'au moins un câble de transmission équipé d'une tête vibreuse.

10. Vibrateur de béton (1) conformément à une quelconque des revendications précédentes, où le boîtier (2) comporte deux moitiés sensiblement symétriques (2a, 2b) reliées entre elles au moyen d'un mécanisme de fixation (11).
